Europäisches Patentamt

European Patent Office

Office européen des brevets

(11) Publication number: **0 047 599**
**A1**

# EUROPEAN PATENT APPLICATION

(21) Application number: 81303817.1

(22) Date of filing: 21.08.81

(51) Int. Cl.³: **B 60 Q 9/00**

(30) Priority: 06.09.80 GB 8028881

(43) Date of publication of application: 17.03.82
Bulletin 82/11

(84) Designated Contracting States: DE FR GB IT SE

(71) Applicant: BL CARS LIMITED, 35-38 Portman Square,
London W1H 0HQ (GB)

(72) Inventor: Eden, Robert Peter, 110 Park Lane,
Kidderminster Worcestershire (GB)
Inventor: Newell, Brian Robert, Cofton Richards Cottage
Cofton Church Lane, Barnt Green Birmingham (GB)

(74) Representative: Waters, Jeffrey, BL Patent and Trade
Mark Department Cowley Body Plant, Cowley Oxford
OX4 5NL (GB)

(54) Warning device for vehicle instrument fascia.

(57) The warning device is arranged to be used in conjunction with an instrument gauge on a vehicle fascia. An electrical signal from the instrument gauge, such as a fuel gauge, is fed to the warning device and compared with a reference electrical signal. When the former reaches the latter, the operational amplifier OA1 switches on transistor T1 and a warning lamp lights up. The reference signal is provided by potential divider R4, R5.

For use with a gauge, such as a bimetallic strip gauge, whose input is derived from stabilised voltage supply, an alternative form of circuit is used for the warning device where potential divider R4, R5 is fed from the stabilised voltage supply.

The warning device could be used to signal high temperature levels, extreme battery voltages or low oil pressure.

WARNING DEVICE FOR VEHICLE INSTRUMENT FASCIA

This invention relates to warning devices for road vehicle instrument fascias.

The invention provides a warning device for indicating when a/vehicle parameter reaches a predetermined level, which is adapted to receive as input an electrical signal from a gauge for indicating that parameter on the vehicle instrument fascia.

For example, the warning device may be for indicating when the fuel supply is low. Hitherto, a float switch to operate the warning device was employed in the fuel tank as well as the fuel tank sender unit which supplied an electrical signal to the fuel gauge. A fuel warning device according to the invention obviates the need for such a separate float switch and associated wiring.

The warning device may be for detecting vehicle parameters other than fuel level. For example, it may be for indicating high temperature levels, high or low battery voltage levels, high engine revolutions or low oil pressure levels. The warning may be audible or visible.

Typical of the indicating gauges employed on the vehicle instrument fascia are air-cored gauges, cross-coiled gauges and bimetallic gauges. In the case when they are used as fuel gauges, the fuel tank contains a sender unit comprising a variable resistance (a 'transmittance' resistance) which varies in accordance with fuel level by virtue of a float. A voltage derived from this variable resistance is supplied to the indicating gauges. In the air-cored and cross-coiled gauges, the variable voltage appears across one of two or more fixed coils and the direction of a magnetic field thus set up varies as the voltage varies: a moving iron or moving magnet in the varying field is then connected to a pointer. In the case of bimetallic gauges, the variable voltage causes a proportional heating effect in a heating element wound around the bimetallic strip and the deflection of the strip is used to move a pointer across the scale of the gauge.

The input signal from the gauge to the warning device thus will usually be a variable voltage, but it is possible for it to be a variable resistance. In the case when the signal is a variable voltage, advantageously, the warning device is arranged to compare the input voltage with a reference voltage. The warning device may include an operational amplifier, the reference and input voltages

0047599

- 3 -

being fed to the inverting and non-inverting inputs. The output of the operational amplifier may then control an electronic switch (for example a semiconductor) in series with a warning lamp.

The reference voltage may be provided by a potential divider supplied by the vehicle battery supply voltage. The reference voltage will thus be a voltage which is a constant ratio at the battery supply voltage. Consequently, if as is the case with many types of gauge, the gauge input signal is dependent on battery supply voltage (this may of course be compensated for in the gauge so the reading is independent of battery voltage) the invention will compensate for variations of battery supply voltage, which can vary significantly (between 11.5 volts and 14 volts).

In the case where the gauges input signals are derived from a stabilised voltage supply, the reference signal may be provided by a potential divider supplied from that stabilised voltage supply.

The circuiting of the warning device may be arranged as a plug-in module that can be directed mounted on the rear of the instrument fascia and can be plugged in to the printed cicuit board of the instrument fascia. This permits easy servicing.

A low fuel warning device constructed in accordance with the invention will now be described, by way of example, with reference to the accompanying drawings in which;

Figure 1 is a schematic view of a fuel gauge;

Figure 2 shows the circuit of the fuel gauge;

Figure 3 shows the electric circuit of a warning device suitable for use with the gauge of Figures 1 and 2;

Figure 4 shows the electric circuit of an alternative form of warning device to be used with bimetal type gauges; and

Figure 5 shows the electric circuit of a further form of warning device.

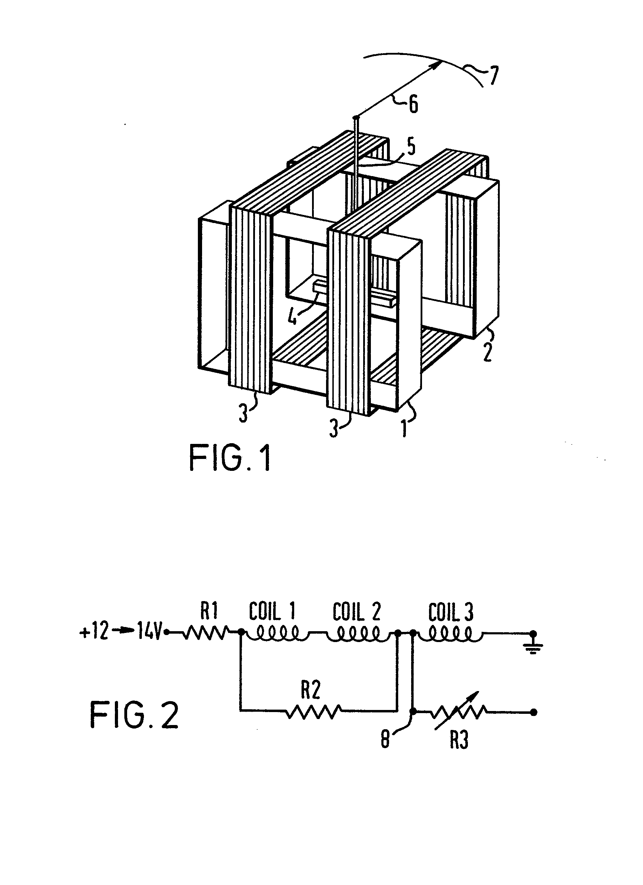

Referring to figure 1, the fuel gauge comprises three fixed coils, two of which, viz, 1,2 are arranged at right angles to a third coil 3. A bar magnet 4 is pivotally mounted on an axis 5 to which is attached a pointer 6 movable over a scale 7. Referring to figure 2, a calibration resistor R2 is arranged in parallel with coils 1 and 2 and a transmittance resistance of a fuel tank R3 is arranged in parallel with coil 3. A ballast resistor R1 is arranged in series with all three coils. When the resistance R3 increases as the fuel tank empties, the current in coil 3 also increases (while the current in coils 1 and 2 remain substantially constant). The magnetic field set up in the coils thus changes in direction and the pointer moves across the scale.

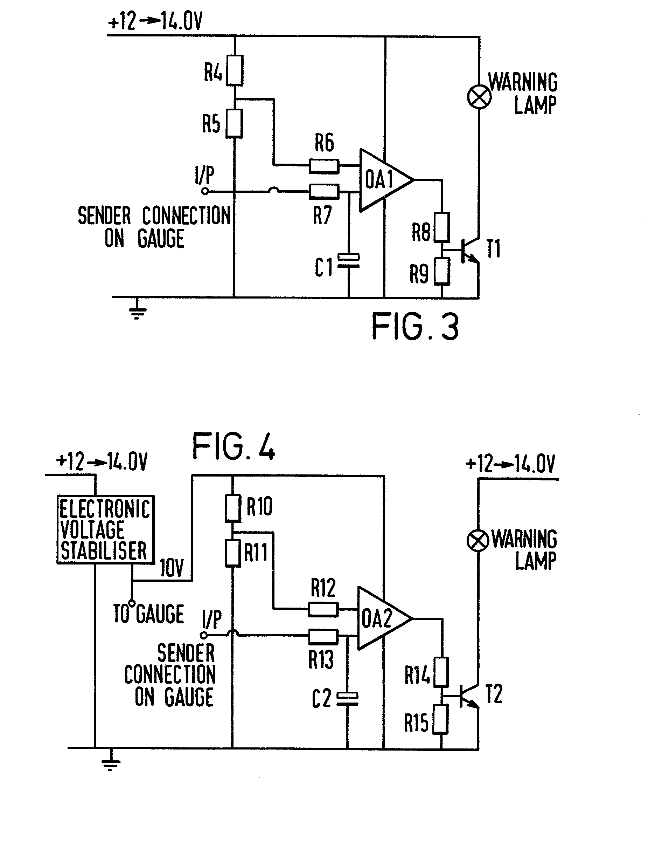

Referring now to figure 3, terminal 8 (figure 2) is connected as one input via a loading resistor R7, to operational amplifier OA1. The amplifier is connected in its differential mode and terminal 8 is connected to the non-inverting input. The inverting input is connected via a loading resistor R6 to the potential divider R4, R5 which provides a reference voltage input for the amplifier. It is to be noted that the reference input varies with battery voltage, which can vary from 11.5 to 14 volts, but the voltage at terminal 8 ( the fuel tank sender connection) also varies with battery voltage and the result of this is the point at which the output of the operational amplifier goes high is independent of battery voltage. The point at which it changes represents a certain proportion of battery volts, hence a certain transmittance resistance, and hence a certain fuel level.

The output of the operational amplifier controls a potential divider R8, R9 and when the output goes high, it switches on a transistor T1 which operates a warning lamp. The potential divider R8, R9 biases the transistor base to zero in the off condition and ensures that the transistor T1 is only on when the output of the amplifier is high.

The capacitance C1 damps the response of the circuit. It is inserted across the sender input and earth to give a small delay on illumination of the lamp. This prevents the lamp flashing on an off when there is fuel turbulence in the tank.

The circuit of figure 3 is suitable for cross-coiled or air-cored gauges, which do not require voltage stabilisers. When a voltage stabiliser is required, as in the case of a bimetallic strip gauge, the circuit of Figure 4 may be used.

The sender connection of the gauge is again fed to the non-inverting input of an operational amplifier OA2. This time, however, the inverting input is supplied from the 10 volt stabilised supply which is fed to the gauge itself. Both inputs are independent of battery voltage, so the amplifier switches transistor T2 on via potential divider R14, R15 at the same fuel level each time. The capacitor C2 serves the same purpose as C1 does in Figure 3. The voltage stabiliser must be of an electronic type to avoid the lamp switching on an off.

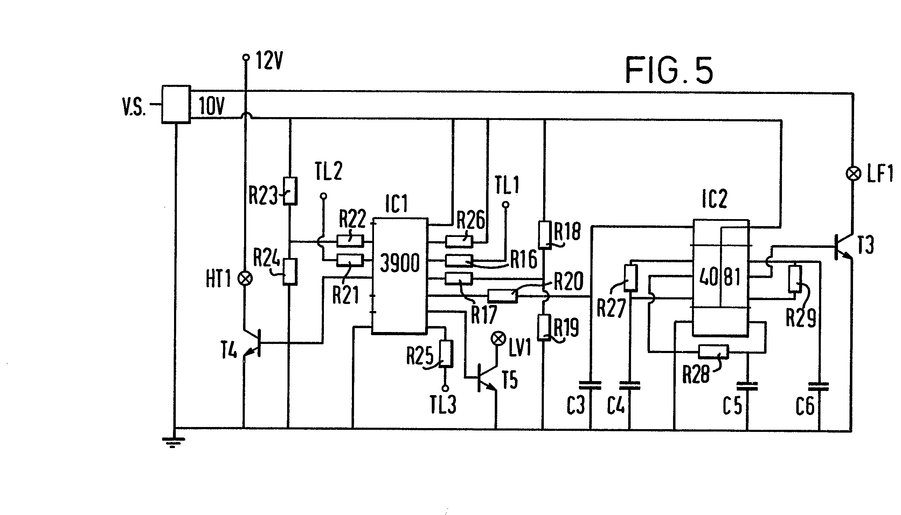

Referring to Figure 5, an integrated circuit ICI includes four operational amplifiers of the OA1 type, which permits other warning functions to be included. Integrated circuit IC2 includes four AND gates which together with capacitors C3—C6 delay the operation of the low fuel warning lamp LF1 to reduce the effect of fuel tank turbulence. The circuit is designed for a fuel gauge such as a bimetallic strip gauge requiring a stabilised voltage supply, (voltage stabiliser VS being provided) but would work equally well for other gauges which do not require a stabilised voltage supply,

in which case the positive rail is taken directly from the battery and not from the stabiliser.

Three of the four operational amplifiers in IC1 are utilised, for low fuel warning, high engine temperature and low battery volts respectively, but it will be apparent that other operational amplifiers could be utilised for other functions if desired.

IC1 takes its power from voltage supply VS. Terminal TL1 connects to the fuel gauge sender connection as in Figure 4, and is connected to IC1 via loading resistor R16, the non-inverting input of OA4. The inverting input connects via loading resistor R17 to the tapping of voltage divider R18, R19. The output of OA4 feeds via resistor R20 as the input to delay circuit IC2. The output of IC2 switches on transistor T3 to illuminate the low fuel warning lamp.

Terminal TL2 connects to the connection between the temperature sender and the coils of a temperature gauge (not shown). Via loading resistor R21, it connects to the inverting input of OA2, the non-inverting input of which is connected via resistor R22 to the tapping of a voltage divider R23,R24. The output of OA2 is directly connected to the base of T4 which has a warning lamp HT1 in its collector lead. This circuit indicates high engine temperature.

Terminal TL3 is connected to the battery supply volts terminal of the battery voltage gauge and, via loading resistor R25, connects to the inverting input of OA3, the non-inverting input of which is connected via resistor R26 to the positive stabilised voltage supply. The output of OA3 is connected to the base of T5, which has a warning lamp LV1 in its collector circuit. This lamp indicates low battery volts, whichindicates that the alternator/ generator is not charging the battery in general.

Referring to IC2, the AND gates are connected in cascade, that is, the output of the first forms a control input to the second etc. The other input to the second (and to all four AND gates) is positive stabilised supply volts. The capacitors C3-C7 are connected between the control input of the AND gates and earth. The output of the fourth AND gate is connected to the base of T5, which has the low fuel warning lamp in its collector lead.

The input of IC2 comes via R20. When the input goes positive, the control input of AND rises under the control of R20, C3 until the AND gate switches through. Then the control input of the second rises under the control of R27, C4 until this switches through, and so on with the third and fourth AND gates. Together the gates provide a 6 - 8 second delay between the input to IC2 going high and the lamp LF1 illuminating. Because four timing circuits are used instead of only one in Figure 4, the discharge time of each can be smaller than for the resistance/capacitance delay of Figure 4, and there is therefore less liklihood of fuel turbulence accidentally switching the lamp on before the low fuel level is reached. If desired, warning lamps could be provided for other functions, to be operated in the same way as for Figures 3,4, or 5: high battery volts; low oil pressure; high speed; high engine revs; low coolant; low brake fluid; low washer fluid; seat belt unfastened. Also the engine temperature could be sensed in conjunction with choke position so that a light could flash when the engine was at working temperature if the choke was still out.

## CLAIMS

1. A warning device for indicating when a/vehicle parameter [road]
reaches a predetermined level, which is adapted to receive
as input an electrical signal from a gauge for indicating
that parameter on the vehicle instrument fascia.

2. A warning device as claimed in claim 1, wherein the warning device is arranged to compare an input electrical
voltage with a reference voltage and to respond when the
input voltage exceeds or falls below the reference voltage.

3. A warning device as claimed in claim 2, wherein the warning device includes an operational amplifier, the reference
and input voltages being fed to the inverting and non-
inverting inputs.

4. A warning device as claimed in claim 3, wherein the output
of the operational amplifier controls an electronic switch
in series with a warning lamp.

5. A warning device as claimed in any one of claims 2 - 4,
wherein the reference electrical voltage is provided by a
potential divider supplied by the vehicle battery supply
voltage.

6. A warning device as claimed in any one of claims 2 - 4, wherein the reference electrical voltage is provided by a potential divider supplied by a stabilised voltage supply.

7. A warning device as claimed in any one of claims 2 to 6, wherein the device is for indicating when fuel is low.

8. A warning device as claimed in claim 7, wherein capacitative means is provided for damping fluctuations in the input electrical voltage to reduce the effect of turbulence in the fuel tank on the operation of the warning lamp.

9. A warning device as claimed in claim 8, wherein the capacitative means comprises a plurality of capacitors each connected to a gate of a series of logic gates arranged in cascade.

10. A warning device as claimed in any one of claims 2 to 6, wherein the device is for indicating excess engine temperature.

11. A warning device as claimed in any one of claims 2 to 6, wherein the device is for indicating low battery voltage.

12. A warning device as hereinbefore described, with reference to ,and as shown in, Figure 3 or 4, or Figure 5, of the accompanying drawings.

13. A vehicle instrument fascia having an indicating gauge and an associated warning device as claimed in any one of claims 1 to 12.

14. A vehicle having an instrument fascia as claimed in claim 13.

1/3

FIG.1

FIG.2

0047599

2/3

FIG. 3

FIG. 4

FIG.5

0047599

**European Patent Office**

## EUROPEAN SEARCH REPORT

Application number

EP 81 30 3817

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | FR - A - 2 382 107 (SOCIETE D'ELECTRICITE MORS) <br><br> * page 2, line 11 to page 3, line 8 and figures 1,2 * <br><br> -- | 1-6, 10-14 | B 60 Q 9/00 |
| X | US - A - 3 909 779 (SNYDER) <br><br> * abstract; figure 1; column 3, lines 56 to 63 * <br><br> -- | 1,4, 7-10 | |
| X | US - A - 3 931 619 (MOORE) <br><br> * figure 3 * <br><br> -- | 1-4,10 12-14 | **TECHNICAL FIELDS SEARCHED (Int. Cl.³)** <br><br> B 60 Q 9/00 <br> G 01 F 23/18 <br> 23/24 |
| | ELEKTOR, no. 60, April 1980, CANTERBURY (GB) "Battery voltage indicator" pages 4.30 and 4.31 <br><br> * the whole document * <br><br> -- | 1-3,11 | |
| | ELECTRONIQUE ET APPLICATIONS INDUSTRIELLES, no. 262S, January 1979 PARIS (FR) F. SCARELLA "Thermomètre électronique à niveau d'alarme réglable" page 35 <br><br> * the whole document * <br><br> -- | 1-5,10 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | DE - A - 2 535 143 (TOYOTA JIDOSHA KOGYO K.K.) <br><br> * figure 1 * | 1,9 | &: member of the same patent family, corresponding document |

The present search report has been drawn up for all claims

| Place of search | Date of completion of the search | Examiner |
|---|---|---|
| The Hague | 26 novembre 1981 | ONILLON |

EPO Form 1503.1 06.78